# EUROPÄISCHE PATENTANMELDUNG

(11) **EP 1 808 375 A1**
(43) Veröffentlichungstag der Anmeldung: **18.07.2007**
(21) Anmeldenummer: 06100336.4
(22) Anmeldetag: 13.01.2006
(51) Int. Cl.: B65B 51/14

(54) **Vorrichtung zur Dichtversiegelung von Verbundfolienbeuteln**

(71) Anmelder: Hilcona Aktiengesellschaft, 9494 Schaan (LI)
(72) Erfinder: Odenthal, Heinz F., 53909 Zülpich (DE)
(74) Vertreter: Wildi, Roland

(57) **Zusammenfassung**

Die vorzugsweise als Mehrkopfmaschine ausgebildete Befüllungsmaschine (1) dient der Befüllung von Verbundfolienbeuteln (10), vorzugsweise mit Nahrungsmitteln. Der Befüllungsmaschine (1) ist eine Vorrichtung zur Dichtversiegelung der befüllten Verbundfolienbeutel (10) nachgeschaltet. Die Vorrichtung zur Dichtversiegelung umfasst eine Ultraschallschweisseinheit (3) sowie eine Zuführeinrichtung (7). Die Zuführeinrichtung (7) dient der Zufuhr der Verbundfolienbeutel (10) von der Befüllungsmaschine (1) zur Ultraschallschweisseinheit (3). Dank der Anordnung der Ultraschallschweisseinheit (3) wird in wirtschaftlicher Weise eine allen Anforderungen gerecht werdende Dichtversiegelung der von der Befüllungsmaschine (1) befüllten Verbundfolienbeutel (10) erzielt.

## Beschreibung

Die Erfindung betrifft eine Vorrichtung zur Dichtversiegelung von einer Befüllungsmaschine entnehmbaren Verbundfolienbeuteln, die insbesondere der Aufnahme von Nahrungsmitteln dienen.

Verbundfolienbeutel werden heute auf unterschiedlichen Gebieten als Verpackungsmittel eingesetzt. Als Material findet beispielsweise Polyester, Aluminium, Polypropylen und dgl. Anwendung. Vielfach haben solche Verbundfolienbeutel eine rechteckförmige Kontur oder sie sind zumindest in ihrem Kopfbereich mit einer geradlinigen Kontur versehen.

Unabhängig vom Gebiet auf welchem Verbundfolienbeutel Anwendung finden, ist ihnen gemeinsam, dass sie nach dem Befüllen mit dem aufzunehmenden Gut durch Heissversiegelung verschlossen werden. So sind die häufig zum Befüllen Anwendung findenden Mehrkopfmaschinen derart mit einer Heisssiegeleinrichtung versehen, dass jedem Befüllkopf eine Heisssiegelstation zugeordnet ist. Dadurch erzeugt jede Heisssiegelstation nach dem Befüllen des Verbundfolienbeutels in seinem Kopfbereich eine Heisssiegelnaht, welche sich parallel zu dessen geradliniger Kontur im Kopfbereich erstreckt.

Es ist vor allem verbreitet, Verbundfolienbeutel der vorgenannten Art auf dem Gebiet der Nahrungsmittel zu verwenden. So finden Verbundfolienbeutel Anwendung für Nahrungsmittel die sowohl in feuchtem als auch in getrocknetem Zustand vorliegen und begasst oder vakuumverpackt werden müssen. So gibt es Produkte die teilweise vor Sauerstoffkontakt und Produkte die teilweise vor Aufnahme von Feuchtigkeit geschützt werden. Bei Produkten die im feuchten Zustand abgefüllt werden, handelt es sich beispielsweise um Kartoffel- oder Nudelgerichte wie Rösti, Tortellini und dgl. Dem gegenüber sind Salzstangen, Chips und dgl. zu jenen Nahrungsmitteln zu zählen, die im getrocknetem Zustand abgefüllt werden.

Die massgebende Voraussetzung für die Haltbarkeit der in obiger Weise abgefüllten Nahrungsmittel besteht darin, dass ein dichter Verschluss erzielt wird. Ein solch dichter Verschluss wird allerdings nur dann erreicht, wenn durch die Heissversiegelung eine einwandfreie Heisssiegelnaht geschaffen wird. Eine solche einwandfreie Heisssiegelnaht wird aber nicht erreicht, wenn beim Befüllen des Verbundfolienbeutels in seinem Kopfbereich, d.h. in jenem Bereich wo die Heisssiegelnaht zu liegen kommt, Reste des zu befüllenden Nahrungsmittels hängen bleiben. Aufgrund dieser damit im Bereich der Heisssiegelnaht zwischen den Wandungen des Verbundfolienbeutels verbleibenden Reste des Nahrungsmittels kommt keine einwandfreie Heissversiegelungsnaht und damit kein dichter Verschluss zustande. Ein Austreten des befüllten Nahrungsmittels ist der eine Nachteil, aber der weitaus grössere Nachteil besteht in der Gefahr des Verderbens des Nahrungsmittels durch Zutritt von Sauerstoff oder Entweichen der durch Begasung dem Nahrungsmittel zugegebenen Schutzatmosphäre.

Da bis anhin noch keine Möglichkeit besteht die vorgenannten Nachteile zu vermeiden, wird der Problematik nur dadurch begegnet, dass die mit Nahrungsmittel befüllten und heissversiegelten Verbundfolienbeutel einer nachträglichen Kontrolle unterzogen werden und zum Teil zusätzlich über mehrere Wochen in einem Quarantänelager zwischengelagert werden. Nach diesem Quarantänelager werden sie einer Zusatzkontrolle unterzogen, so dass die nicht dicht verschlossenen Verbundfolienbeutel endgültig ausgeschieden werden können.

Es ist offensichtlich, dass die vorgenannte Vorgehensweise die aufgrund der Unsicherheiten bei der Heissversiegelung unerlässlich ist, zu einem äusserst grossen Aufwand einerseits bezüglich Personalressourcen und andererseits bezüglich Lagerkapazität für das Quarantänelager führt. Eine Verteuerung der Produkte durch mangelhafte Wirtschaftlichkeit bei der Herstellung liegt damit vor.

Der vorliegenden Erfindung liegt damit die Aufgabe zugrunde, den vorerwähnten Nachteile derart zu begegnen, dass eine Vorrichtung zur Erzielung eines dichten Verschlusses geschaffen wird, unabhängig davon, ob Verbundfolienbeutel der genannten Art im Verschlussbereich mit Resten des zu verfüllenden Guts behaftet sind oder ob anderweitige Verschmutzungen oder Fremdkörper vorhanden sind.

Erfindungsgemäss wird die Aufgabe dadurch gelöst, dass zur Dichtversiegelung von Verbundfolienbeutel die einer Befüllungsmaschine entnehmbar sind, eine Vorrichtung geschaffen wird, die eine Dichtversiegelung der Verbundfolienbeutel dienende Ultraschallschweisseinheit und eine der Zufuhr der Verbundfolienbeutel von der Befüllungsmaschine zur Ultraschweisseinheit dienende Zuführeinrichtung aufweist.

Die gemäss vorliegender Erfindung vorgeschlagene Vorrichtung macht damit von den gegenüber einer Heissversiegelung wesentlich besseren Eigenschaften einer Ultraschallverschweissung gebrauch. So hat es sich gezeigt, dass in allen Fällen eine absolut dichte Ultraschallverschweissung zustande kommt, selbst wenn die Verbundfolienbeutel im Verschlussbereich Reste von Nahrungsmittel oder anderweitige Verunreinigungen aufweisen. So besteht absolut Gewähr, dass die Verbundfolienbeutel dicht verschlossen sind, vorausgesetzt dass die durch die Ultraschallverschweissung entstandene Schweissnaht den zu veschliessenden Bereich des Verbundfolienbeutels vollständig durchsetzt, d.h. die Schweissnaht muss im Wesentlichen parallel zur geradlinigen Kontur des Kopfbereiches verlaufen. Um auch diesem Aspekt Rechnung zu tragen schlägt damit die Erfindung ferner vor, dass die Vorrichtung eine Zuführeinrichtung aufweist, die der Zufuhr der befüllten Verbundfolienbeutel zur Ultraschallschweisseinheit dient.

Insgesamt gesehen zielt die vorliegende Erfindung damit darauf ab, unabhängig von der Anwendung findenden Befüllungsmaschine eine wirtschaftliche Lösung für eine dichte Versiegelung zu schaffen. Durch die separate Anordnung nur einer der Befüllungsmaschine nachgeschalteten Vorrichtung für die Ultraschallverschweissung, welche aufwendig und auch entsprechend teuer ist, besteht nach wie vor die Möglichkeit als Befüllungsmaschine eine Mehrkopfmaschine zu verwenden, wobei deren Köpfe in herkömlicherweise einfach aufgebaut bleiben können und keines besonderen Mehraufwandes bedürfen.

Um ein einwandfreies und ausserordentlich kurze Taktzeiten ermöglichendes Zuführen der Verbundfolienbeutel von der Befüllungsmaschine zur Ultraschallschweisseinheit zu schaffen, weist vorzugsweise die Ultraschallschweisseinheit eine Schweisszange mit zwei einen Schweissspalt bildenden Schweissbacken auf, von denen wenigstens einer zum Schliessen der Schweisszange quer zur Längsrichtung des Schweisspaltes bewegbar ist. Eine derartige Ausbildung der Vorrichtung gewährleistet aufgrund der kurzen Wege und optimalen Zufuhr zur Ultraschallschweisseinheit einen einwandfreien Verlauf der Siegelnaht, so dass ein dichter Verschluss der Verbundfolienbeutel gegeben ist.

Um ferner zu gewährleisten, dass die befüllten Verbundfolienbeutel der Befüllungsmaschine einwandfrei entnommen und entsprechend ausgerichtet der Ultraschallschweisseineheit zugeführt werden, weist gemäss einem weiterem Vorschlag der Erfindung die Zuführeinrichtung zwei Aufnahmeeinrichtungen auf, die dem Fassen der Verbundfolienbeutel dienen.

Vorzugsweise sind die dem Fassen der Verbundfolienbeutel dienenden Aufnahmeeinrichtungen jeweils entlang einer Ebene bewegbar, welche senkrecht zur Längserstreckung der den Schweissspalt bildenden Schweissbacken verlaufen. Eine solche Anordnung der die Verbundfolienbeutel fassenden Aufnahmeeinrichtungen stellt sicher, dass die Verbundfolienbeutel an ihren seitlichen Randbereichen gefasst werden und somit keine Behinderung bei der Entnahme aus der Befüllungsmaschine und bei der Zuführung in die Ultraschallschweisseinheit erfolgt. Zudem ermöglicht diese Anordnung eine einfache Anpassung an unterschiedliche Verbundfolienbeutelformate, indem eine Einrichtung vorgesehen ist mit welcher sich der Abstand der Aufnahmeeinrichtungen zueinander verstellen lässt, d.h. im Endeffekt werden die Ebenen entlang welcher die Aufnahmeeinrichtungen bewegbar sind zueinander verstellt.

Falls vorteilhafter Weise die Ebenen entlang welcher die Aufnahmeeinrichtungen bewegbar sind sich quer zur Längserstreckung der Schweissbacken verstellen lassen, wird die Möglichkeit geschaffen die erfindungsgemässe Vorrichtung für unterschiedliche Formate von Verbundfolienbeuteln zu verwenden. So führt die Verstellbarkeit der Aufnahmeeinrichtungen selbst bei breiten Verbundfolienbeutel zu keinen Behinderungen.

Das Fassen der Verbundfolienbeutel hat temporär und zwar je nach Ausbildung der Zuführeinrichtung sehr kurzzeitig zu erfolgen, d.h. nur über jenen Zeitraum der sich zwischen der Freigabe der Verbundfolienbeutel durch die Befüllungsmaschine und der Aufnahme in der Ultraschallschweisseinheit durch Schliessen der Schweisszange erstreckt. So besteht eine Möglichkeit zum Fassen der Verbundfolienbeutel, in der Anordnung von Saugeinheiten an den Aufnahmeeinrichtungen. Eine weitere Möglichkeit besteht darin, die Aufnahmeeinrichtungen an ihren freien Enden mit Greifzangen zu versehen, welche die Verbundfolienbeutel temporär während des vorgenannten Zeitraumes fassen.

Um im letzteren Falle zu gewährleisten, dass in einer die Entnahme und Zufuhr nicht behinderten Weise nur die Randbereiche der Verbundfolienbeutel von den Greifzangen gefasst werden, sind diese vorzugsweise in einer parallel zum Schweissspalt verlaufenden Ebene in jenen Raum einschwenkbar, welcher zwischen den Ebenen liegt, entlang welcher die Aufnahmeeinrichtungen bewegbar sind. Eine solche Verschwenkung ist in der Regel nur um etwa 90 Grad erforderlich, so dass es möglich ist, die Zeit für das temporäre Fassen der Verbundfolienbeutel äusserst tief zu halten, was weiter zur Erzielung einer hohen Taktzeit beiträgt.

Nachdem sich in bevorzugter Weise die Ebenen entlang welcher die Aufnahmeeinrichtungen bewegbar sind, zumindest zwischen der Befüllungsmaschine und der Schweisszange der Ultraschallschweisseinheit erstrecken, ist gewährleistet, dass die nachgeschaltete Anordnung der erfindungsgemässen Vorrichtung eine wirtschaftliche und kurze Taktzeiten ermöglichende Gesamteinheit zur Befüllung und zum Verschliessen von Verbundfolienbeuteln schafft.

Die erfindungsgemässe Vorrichtung schafft ferner die Möglichkeit, den erfindungsgemässen Vorteil selbst bei Befüllungsmaschinen deren Köpfe mit einer Heisssiegeleinrichtung versehen sind zu nutzen, indem vorzugsweise die erfindungsgemässe Vorrichtung, bestehend aus Ultraschallschweisseinheit und Zuführeinrichtung, einer Befüllungsmaschine nachgeschaltet ist, wobei die Verwendung findende Befüllungsmaschine als Mehrkopfmaschine mit Heisssiegeleinrichtungen aufweisenden Köpfen ausgebildet sein kann.

In einem solchen Fall, d.h. wenn die Köpfe der betreffenden Befüllungsmaschine mit einer Heisssiegeleinrichtung versehen sind, weisen die Verbundfolienbeutel eine erste Naht, nämlich eine Heisssiegelnaht und nach dem Durchlaufen der Ultraschallschweisseinheit eine zweite Naht, nämlich die Ultraschallschweissnaht auf. Vorzugsweise verlaufen beide Nähte parallel zueinander, wobei es an sich egal ist, welche der Nähte sich am äusseren Ende des Kopfbereiches des Verbundfolienbeutels befindet. Nachdem aber davon auszugehen ist, dass bei einer Vielzahl der die Befüllungsmaschine verlassenden Verbundfolienbeutel die Heisssiegelnaht nicht dicht ist, bietet es sich an, die Verbundfolienbeutel derart der Ultraschallschweissvorrichtung zuzuführen, dass die Ultraschallschweissnaht zum freien Ende hin des Kopfbereiches sich in geringem Abstand an die Heisssiegelnaht anschliesst. So liegt die dichte Naht ganz ausserhalb und verhindert dadurch ein unschönes Aussehen des Verbundfolienbeutels oder schlechte Gerüche durch Nahrungsmittelreste im Bereich der Heisssiegelnaht.

Sofern sich die zur Anwendung gelangende Befüllungmaschine dafür eignet, können die an sich überflüssigen Heisssiegeleinrichtungen von den Köpfen entfernt werden, um so durch Weglassen des Heisssiegelvorganges die Verweildauer in der Befüllungsmaschine zu kürzen, was weiters zu einer Erhöhung der Taktzeit beiträgt. Lassen sich die Heisssiegeleinrichtungen wirtschaftlich nicht entfernen, entsteht weiter kein Nachteil, da die Heisssiegelnaht bei vakuumierten oder begasten Verbundfolienbeutel dazu beträgt, den Druckunterschied gegenüber der Atmosphäre zu halten, bis der schlussendlich dichte Verschluss durch die Ultraschallverschweissung erfolgt.

Die erfindungsgemässe Vorrichtung wird nachstehend anhand einer ein Ausführungsbeispiel wiedergegebenen Prinzipsskizze näher erläutert und zwar zeigen:
Fig. 1 eine schematische Draufsicht auf die erfindungsgemässe Vorrichtung nachgeschaltet einer als Mehrkopfmaschine ausgebildeten Befüllungsmaschine 1, ebenfalls schematisch dargestellt.
Fig. 2 eine schematische Ansicht entsprechend Pfeil A der erfindungsgemässen Vorrichtung von Fig. 1.

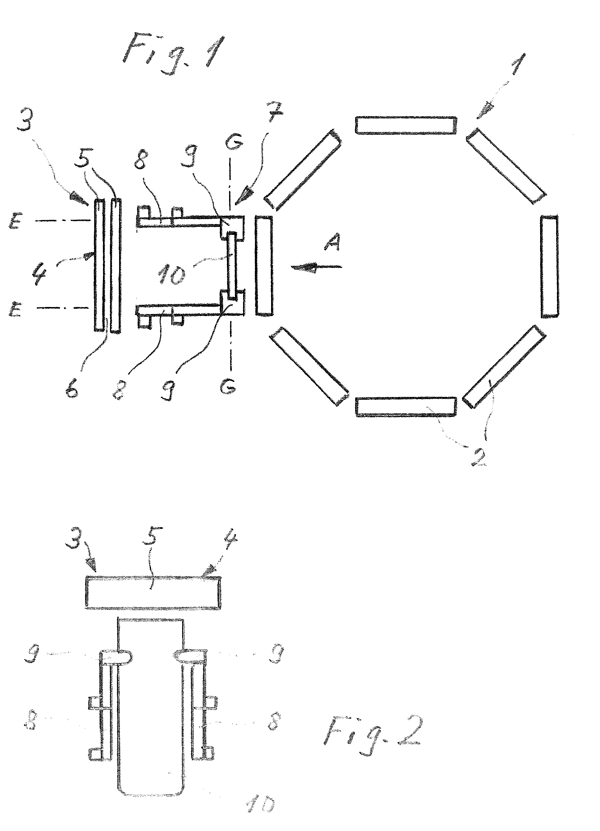

Fig. 1 zeigt rein schematisch eine Draufsicht auf eine Befüllungsmaschine 1 die als Mehrkopfmaschine ausgebildet ist. Diese als Mehrkopfmaschine ausgebildete Befüllungsmaschine 1 weist Köpfe 2 auf, welche der Aufnahme der zu befüllenden Verbundfolienbeutel während des Befüllungsvorganges dienen. Diese Köpfe 2 können ggf. je mit einer Heisssiegeleinrichtung versehen sein.

Die Fig. 1 zeigt ferner die erfindungsgemässe Vorrichtung aufweisend eine Ultraschallschweisseinheit 3, welche durch schematische Darstellung der Schweissbacken 5 aufweisenden Schweisszange 4 illustriert ist. Zwischen den Schweissbacken 5 befindet sich ein durch Bewegen mindestens einer Schweissbacken 5 schliessbarer Schweissspalt 6.

Die erfindungsgemässe Vorrichtung umfasst ferner eine Zuführeinrichtung 7 aufweisend zwei Aufnahmeeinrichtungen 8. An den freien Enden dieser Aufnahmeeinrichtungen 8 befinden sich Greifzangen 9.

Die eine Ansicht gemäss Pfeil A darstellende Fig. 2 zeigt wiederum die Schweissbacken 5 aufweisende Schweisszange 4 der Ultraschallschweisseinheit. Ferner sind der Fig. 2 die beiden Aufnahmeeinrichtungen 8 mit Greifzangen 9 entnehmbar.

Die Funktionsweise der erfindungsgemäsen Vorrichtung erfolgt in der Weise, dass sich die beiden Aufnahmeeinrichtungen 8 der Zuführeinrichtung 7 entlang der Ebenen E bewegen lassen. Diese Ebenen E verlaufen senkrecht zur Längserstreckung der den Schweissspalt 6 bildenden Schweissbacken 5. Die an den freien Enden der Aufnahmeeinrichtungen 8 angeordneten Greifzangen lassen sich entlang der Ebene G verschwenken und zwar in den Raum zwischen den beiden Ebenen E bzw. aus diesem Raum hinaus.

Zum Fassen eines von der Befüllungsmaschine 1 freigegebenen Verbundfolienbeutels bewegen sich die beiden Aufnahmeeinrichtungen 8 der Zuführeinrichtung 7 von der Ultraschallschweisseinheit 3 in Richtung Befüllungsmaschine 1, wobei während dieser Bewegung die Greifzangen 9 aus dem Raum zwischen den Ebenen E ausgeschwenkt sind. Sobald der betreffende Kopf 2 der Befüllungsmaschine 1 erreicht ist, schwenken die Spannzangen 9 in den Raum zwischen den Ebenen E ein und fassen temporär einen Verbundfolienbeutel 10. Letzter wird durch Bewegen der Aufnahmeeinrichtungen 8 der Zuführeinrichtung 7 von der Befüllungsmaschine 1 wegbefördert und der Ultraschallschweisseinheit 3 zugeführt. Sobald der Verbundfolienbeutel 10 ausreichend in den Schweissspalt 6 hineingeführt worden ist schliesst die Schweisszange 4, der Beutel wird temporär von der Schweisszange 4 gehalten und es erfolgt der Ultraschallschweissvorgang. Sobald der Verbundfolienbeutel 10 von der Schweisszange 4 gehalten ist, geben die Spannzangen 9 den Verbundfolienbeutel 10 frei, indem die Spannzangen 9 aus dem Raum zwischen den Ebenen E ausgerückt werden. Damit steht die Zuführeinrichtung 7 mit ihren Spannzangen 9 aufweisenden Aufnahmeeinrichtungen 8 zum Fassen des nächsten Verbundfolienbeutels wieder zur Verfügung, welcher vom nächsten Kopf 2 der Befüllungsmaschine 1 freigegeben wird. In der Zwischenzeit wurde der Ultraschallschweissvorgang abgeschlossen und die Schweisszange 4 hat den Verbundfolienbeutel 10 freigegeben, welcher beispielsweise durch eine zeichnerisch nicht dargestellte Rutsche oder ein Förderband zum Verpacken weiter transportiert wird.

Die Taktzeiten der erfindugnsgemässen Vorrichtung können dank der aufgezeigten Anordnung äusserst kurz gehalten werden und bewegen sich im Bereich von einer Sekunde. So wird die Möglichkeit geschaffen, dass einer als Mehrkopfmaschine ausgebildeten Befüllungsmaschine lediglich eine einzige erfindungsgemässe Vorrichtung zur Ultraschallverschweissung nachgeschaltet ist. Dies führt zum anforderungsgemässen wirtschaftlichen, sicheren und dichten Verschliessen von Verbundfolienbeuteln egal, mit welchem Gut diese befüllt werden, seien es beispielsweise feuchte oder getrocknete Nahrungsmittel.

## Patentansprüche

1. Vorrichtung zur Dichtversiegelung von einer Befüllungsmaschine (1) entnehmbaren Verbundfolienbeuteln (10), die insbesondere der Aufnahme von Nahrungsmitteln dienen, **gekennzeichnet durch** eine der Dichtversiegelung der Verbundfolienbeutel (10) dienende Ultraschallschweisseinheit (3) und eine der Zufuhr der Verbundfolienbeutel (10) von der Befüllungsmaschine (1) zur Ultraschallschweisseinheit (3) dienende Zuführeinrichtung (7).

2. Vorrichtung nach Anspruch 1, **dadurch gekennzeichnet, dass** die Ultraschallschweisseinheit (3) eine Schweisszange (4) mit zwei einen Schweissspalt (6) bildenden Schweissbacken (5) aufweist, von denen wenigstens einer zum Schliessen der Schweisszange (4) quer zur Längserstreckung der den Schweissspaltes (6) bildenden Schweissbacken (5) bewegbar ist.

3. Vorrichtung nach Anspruch 1 oder 2, **dadurch gekennzeichnet, dass** die Zuführeinrichtung (7) zwei Aufnahmeeinrichtungen (8) für die Verbundfolienbeutel (10) aufweist.

4. Vorrichtung nach Anspruch 3, **dadurch gekennzeichnet, dass** die Aufnahmeeinrichtungen (8) jeweils entlang einer Ebene (E) bewegbar sind, welche senkrecht zur Längserstreckung der den Schweisspalt (6) bildenden Schweissbacken (5) verlaufen.

5. Vorrichtung nach Anspruch 4, **dadurch gekennzeichnet, dass** die Ebenen (E) entlang welcher die Aufnahmeeinrichtungen (8) bewegbar sind, quer zur Längserstreckung der den Schweissspalt bildenden Schweissbacken (4) verstellbar sind.

6. Vorrichtung nach einem der Ansprüche 3 bis 5, **dadurch gekennzeichnet, dass** die freien Enden der Aufnahmeeinrichtungen (8) mit den Verbundfolienbeuteln (10) temporär in Verbindung tretende Saugeinheiten aufweisen.

7. Vorrichtung nach einem der Ansprüche 3 bis 5, **dadurch gekennzeichnet, dass** die freien Ende der Aufnahmeeinrichtungen (8) mit den Verbundfolienbeuteln (10) temporär in Verbindung tretende Greifzangen (9) aufweisen.

8. Vorrichtung nach Anspruch 7, **dadurch gekennzeichnet, dass** die Greifzangen (9) entlang einer parallel zum Schweissspalt (6) verlaufenden Ebene (G) in jenen Raum einschwenkbar sind, welcher zwischen den Ebenen (E) liegt entlang welchen die Aufnahmeeinrichtungen (8) bewegbar sind.

9. Vorrichtung nach einem der Ansprüche 4 bis 8, **dadurch gekennzeichnet, dass** die Ebenen (E) entlang welcher die Aufnahmeeinrichtungen (8) bewegbar sind, sich zumindest zwischen der Beutelfüllmaschine (1) und der Schweisszange (4) der Ultraschallschweisseinheit (3) erstrecken.

10. Verwendung einer der Vorrichtung nach den Ansprüchen 1 bis 9, vorgeschalteten Befüllungsmaschine (1) **gekennzeichnet durch** die Ausbildung als Mehrkopfmaschine mit Heisssiegeleinrichtungen aufweisenden Köpfen (2).
